# EUROPEAN PATENT APPLICATION

(11) **EP 4 503 630 A1**
(43) Date of publication of application: **05.02.2025**
(21) Application number: 23774382.8
(22) Date of filing: 24.02.2023
(51) Int. Cl.: H04N 23/54, H04N 23/60

(54) **SENSOR DEVICE, SENSOR CONTROL SYSTEM, AND CONTROL METHOD**

(30) Priority: 24.03.2022 JP 2022048084
(71) Applicant: Sony Group Corporation, Tokyo 108-0075 (JP)
(72) Inventor: TAKATSUKA, Susumu, Tokyo 108-0075 (JP); UENO, Hiroshi, Tokyo 108-0075 (JP); TETSUKAWA, Hiroki, Tokyo 108-0075 (JP)
(74) Representative: MFG Patentanwälte Meyer-Wildhagen Meggle-Freund Gerhard PartG mbB
(86) International application number: PCT/JP2023/006770
(87) International publication number: WO 2023/181783

(57) **Abstract**

For a sensor apparatus as a laminated AI sensor, the processing efficiency of an AI processing unit is improved, so that the AI processing function is enhanced, the speed is increased, and the robustness of the AI processing is improved.

A sensor apparatus according to the present technology includes a structure in which a first semiconductor layer including an image array unit in which a plurality of pixels having a light receiving element is two-dimensionally arranged, and a second semiconductor layer including an AI processing unit that performs AI processing, which is processing using an AI model, on a captured image obtained on the basis of a light receiving operation by the pixel array unit are laminated, and a control unit that performs control for distributing processing executed by the AI processing unit with another sensor apparatus having a structure in which the first semiconductor layer and the second semiconductor layer are laminated.

## Description

### TECHNICAL FIELD

The present technology relates to a sensor apparatus including an AI processing unit that performs AI processing, which is processing using an AI model, on a captured image, a sensor control system including a plurality of the sensor apparatuses, and a control method in the sensor control system, and particularly relates to a processing distribution technology between the sensor apparatuses.

### BACKGROUND ART

Solution business using an imaging apparatus (hereinafter, referred to as an "AI camera") that performs AI processing, which is processing using an artificial intelligence (AI) model, for a captured image is conceivable. For example, there may be a business that provides a system in which one or a plurality of AI cameras is arranged within a store, a recognition result regarding an attribute (for example, gender, age group, or the like) and a behavior pattern of a customer is obtained by, for example, image recognition processing, and the recognition result is presented to a user over the Internet or the like.

Since the AI processing is performed on the side of the AI camera, the processing can be distributed and the amount of communication data can be reduced as compared with a system in which the server apparatus side performs the AI processing on the basis of the captured image acquired from each camera.

Note that Patent Document 1 below can be cited as a related art. Patent Document 1 below discloses a sensor apparatus in which a first substrate including a pixel array unit and a second substrate including an AI processing unit that performs AI processing on a captured image obtained on the basis of a light receiving operation by the pixel array unit are laminated.

### CITATION LIST

### PATENT DOCUMENT

Patent Document 1: Japanese Patent Application Laid-Open No. 2020-25263

### SUMMARY OF THE INVENTION

### PROBLEMS TO BE SOLVED BY THE INVENTION

Here, a sensor apparatus (hereinafter, referred to as a "laminated AI sensor") having a structure in which a first substrate (first semiconductor layer) including a pixel array unit and a second substrate (second semiconductor layer) including an AI processing unit are laminated as described above is advantageous from the viewpoint of reducing power consumption and achieving real-time AI processing. In addition, since the laminated AI sensor can make it difficult for the captured image to flow out to the outside of the sensor when performing the AI processing on the captured image, there is an advantage also from the viewpoint of protecting the privacy of the subject and preventing leakage of know-how by closing in the sensor.

However, the laminated AI sensor has the following problems due to the structure in which the first semiconductor layer including the pixel array unit and the second semiconductor layer including the AI processing unit are laminated.
- Image quality degradation caused by electromagnetic noise due to power variation in second semiconductor layer
- Warpage problem due to difference in thermal expansion amount accompanying increase in calorific value
- Increase (overheat) in thermal noise of sensor due to increase in calorific value

In order to reduce the above problems, in general, a laminated AI sensor tends to use a low-spec arithmetic unit for the AI processing unit with respect to the capability of the pixel (the number of pixels), and the possible processing for sufficient image information is limited to a function with a small calculation cost such as counting or face recognition. In addition, since a low-specification arithmetic unit is used, the speed of the AI processing also tends to decrease.

The present technology has been made in view of the above circumstances, and an object of the present technology is to enhance and speed up AI processing functions and improve robustness of AI processing by improving processing efficiency of an AI processing unit for a sensor apparatus as a laminated AI sensor.

### SOLUTIONS TO PROBLEMS

A sensor apparatus according to the present technology includes a structure in which a first semiconductor layer including an image array unit in which a plurality of pixels having a light receiving element is two-dimensionally arranged, and a second semiconductor layer including an AI processing unit that performs AI processing, which is processing using an AI model, on a captured image obtained on the basis of a light receiving operation by the pixel array unit are laminated, and a control unit that performs control for distributing processing executed by the AI processing unit with another sensor apparatus having a structure in which the first semiconductor layer and the second semiconductor layer are laminated.

As a result, in the sensor group including the plurality of sensor apparatuses as the laminated AI sensor in which the first and second semiconductor layers are laminated, the processing executed by the AI processing unit is distributed. Furthermore, since the control of the processing distribution is performed between the sensor apparatuses mainly by the sensor apparatus, for example, the robustness of the AI processing can be improved as compared with a case where a configuration is adopted in which an external apparatus other than the sensor apparatus such as a server apparatus undertakes stopped processing or overflowed processing.

Furthermore, a sensor control system according to the present technology includes a plurality of sensor apparatuses having a structure in which a first semiconductor layer including an image array unit in which a plurality of pixels having a light receiving element is two-dimensionally arranged, and a second semiconductor layer including an AI processing unit that performs AI processing, which is processing using an AI model, on a captured image obtained on the basis of a light receiving operation by the pixel array unit are laminated, in which at least one of the sensor apparatuses includes a control unit that performs control for distributing processing executed by the AI processing unit with another sensor apparatus.

Also with such a sensor control system, functions similar to those of the sensor apparatus according to the present technology described above can be obtained.

Furthermore, a control method according to the present technology is a control method in a sensor control system including a plurality of sensor apparatuses having a structure in which a first semiconductor layer including an image array unit in which a plurality of pixels having a light receiving element is two-dimensionally arranged, and a second semiconductor layer including an AI processing unit that performs AI processing, which is processing using an AI model, on a captured image obtained on the basis of a light receiving operation by the pixel array unit are laminated, in which at least one of the sensor apparatuses performs control for distributing processing executed by the AI processing unit with another sensor apparatus.

Also with such a control method, functions similar to those of the sensor apparatus according to the present technology described above can be obtained.

### BRIEF DESCRIPTION OF DRAWINGS

Fig. 1 is a block diagram illustrating a schematic configuration example of an information processing system as an embodiment.
Fig. 2 is a block diagram illustrating a configuration example of an imaging apparatus including a sensor apparatus as an embodiment.
Fig. 3 is an explanatory diagram of a structure example of a sensor apparatus as an embodiment.
Fig. 4 is an explanatory diagram of a processing distribution method as the first embodiment.
Fig. 5 is a diagram illustrating processing executed by each sensor apparatus in a case where a sensor apparatus participates in a sensor group.
Fig. 6 is a diagram illustrating a processing example corresponding to a case where a sensor apparatus is separated from a sensor group.
Fig. 7 is a flowchart illustrating a processing procedure example on the entrusting side as an example of a specific processing procedure to be executed in each sensor apparatus in order to realize a processing distribution method as the first embodiment.
Fig. 8 is a flowchart illustrating a processing procedure example on the accepting side as an example of a specific processing procedure to be executed in each sensor apparatus in order to realize a processing distribution method as the first embodiment.
Fig. 9 is an explanatory diagram of an arrangement example of a sensor apparatus.
Fig. 10 is an explanatory diagram of another example of the arrangement of sensor apparatuses.
Fig. 11 is a flowchart illustrating processing for sharing information related to a target between sensor apparatuses.
Fig. 12 is a flowchart illustrating a processing example on the entrusting side in a case where processing to be entrusted is determined on the basis of priority in the second embodiment.
Fig. 13 is a flowchart illustrating a processing example on the accepting side in a case where processing to be accepted is determined on the basis of priority in the second embodiment.
Fig. 14 is an explanatory diagram of an example of a processing distribution method in the third embodiment.
Fig. 15 is an explanatory diagram of another example of a processing distribution method in the third embodiment.
Fig. 16 is a flowchart illustrating a processing procedure example for realizing a processing distribution method as the third embodiment.

### MODE FOR CARRYING OUT THE INVENTION

Hereinafter, embodiments according to the present technology will be described in the following order with reference to the accompanying drawings.
<1. First Embodiment>
(1-1. Schematic Configuration of System)
(1-2. Configuration of Camera)
(1-3. Processing Distribution Method as First Embodiment)
(1-4. Processing Procedure)
<2. Second Embodiment>
<3. Third Embodiment>
<4. Modifications>
<5. Summary of Embodiments>
<6. Present Technology>

### <1. Information Processing System>

### (1-1. Overall System Configuration)

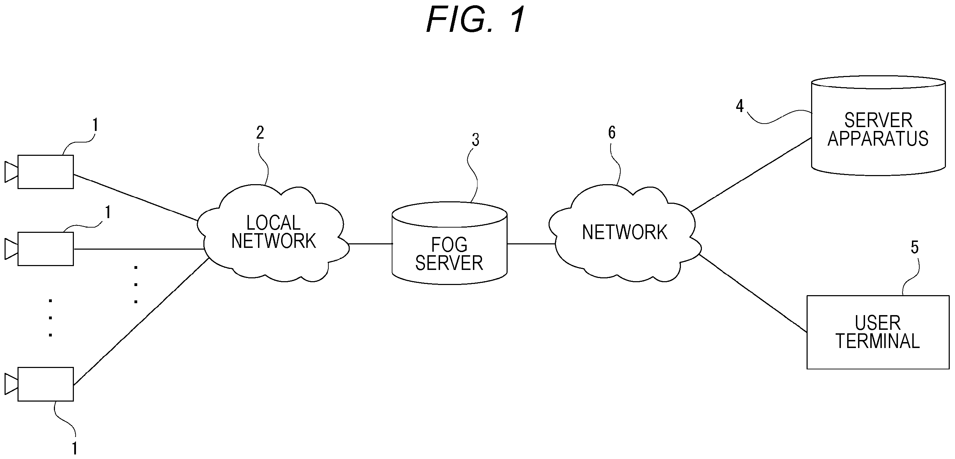

Fig. 1 is a block diagram illustrating a schematic configuration example of an information processing system as an embodiment according to the present technology.

As illustrated, the information processing system as an embodiment includes a plurality of cameras 1, a fog server 3, a server apparatus 4, and one or a plurality of user terminals 5.

The fog server 3, the server apparatus 4, and the user terminal 5 are configured as an information processing apparatus including a microcomputer including a central processing unit (CPU), a read only memory (ROM), and a random access memory (RAM).

Here, the user terminal 5 is an information processing apparatus assumed to be used by a user who is a receiver of a service using the information processing system. In addition, the server apparatus 4 is an information processing apparatus assumed to be used by a service provider.

Each camera 1 includes, for example, an image sensor such as a charge coupled device (CCD) type image sensor or a complementary metal oxide semiconductor (CMOS) type image sensor, and images a subject to obtain image data (captured image data) as digital data. In addition, as described later, each camera 1 also has a function of performing artificial intelligence (AI) processing, which is processing using an AI model, on a captured image.

In the information processing system of the embodiment, the server apparatus 4 is able to perform data communication with the user terminal 5 and the fog server 3 via a network 6 such as the Internet.

Furthermore, in the present example, the plurality of cameras 1 and the fog server 3 are connected so as to be able to perform data communication via a local network 2 such as a local area network (LAN) .

Each camera 1 can perform data communication with the server apparatus 4 and the user terminal 5 via the network 6 via the fog server 3 connected via the local network 2.

Here, the information processing system illustrated in Fig. 1 is assumed to be used in such a manner that the fog server 3 or the server apparatus 4 generates analysis information of a subject on the basis of information (hereinafter, described as "processing result information") indicating an AI processing result obtained by the AI processing of each camera 1 and allows the user to browse the generated analysis information via the user terminal 5.

In this case, the possible use of each camera 1 includes the uses as various types of surveillance cameras. The examples of the use include the uses as: a surveillance camera for monitoring indoors such as a store, an office, or a house, a surveillance camera (including a traffic surveillance camera and the like) for monitoring outdoor such as a parking lot or a street, a surveillance camera for a production line of factory automation (FA) or industrial automation (IA), and a surveillance camera for monitoring the inside or outside of a vehicle.

For example, in a case where the camera 1 is used as a surveillance camera for a store, it is conceivable to arrange a plurality of cameras 1 at predetermined positions in the store so as to allow the user to check customer demographics (gender, age group, or the like), customer actions (flow line) within the store, and the like. In this case, it is conceivable to generate, as the above-described analysis information, information regarding the customer demographics, information regarding the flow line in the store, information regarding a congestion status at a checkout (for example, information regarding a waiting time at the checkout), and the like.

Alternatively, in a case where the camera 1 is used as a traffic surveillance camera, it is conceivable to arrange each camera 1 at a position near a road so as to allow the user to recognize information such as a license number (vehicle number), a vehicle color, a vehicle type, and the like regarding a passing vehicle, and in this case, it is conceivable to generate, as the above-described analysis information, information such as the license number, the vehicle color, the vehicle type, and the like.

Furthermore, in a case where the camera 1 is used as a traffic surveillance camera for a parking lot, it is conceivable to arrange the camera so as to be able to monitor each parked vehicle, monitor whether or not there is a suspicious person acting suspiciously around each vehicle, and in a case where there is a suspicious person, make a notification of a fact that there is a suspicious person, an attribute (gender, age group, clothes, or the like) of the suspicious person, and the like.

Moreover, it is also conceivable to monitor a street or an available space in the parking lot and notify the user of a place of the available parking space or the like.

In a case where the camera 1 is used as a surveillance camera for a store as described above, the fog server 3 is designed to be arranged in a store being monitored together with each camera 1, that is, arranged for each object being monitored, for example. Providing the fog server 3 for each object being monitored such as a store as described above eliminates the need for the server apparatus 4 to directly receive transmission data from the plurality of cameras 1 installed for the objects being monitored, which allows a reduction in processing load on the server apparatus 4.

Note that, in a case where there is a plurality of stores being monitored and all the stores belong to the same corporate group, one fog server 3 may be provided for the plurality of stores rather than being provided for each store. That is, the present technology is not limited to the configuration where one fog server 3 is provided for each object being monitored, and one fog server 3 can be provided for a plurality of objects being monitored.

Note that, in a case where the function of the fog server 3 can be provided to the server apparatus 4 or each camera 1 because the server apparatus 4 or each camera 1 has processing capability or the like, the fog server 3 may be omitted in the information processing system, and each camera 1 may directly perform data communication with the server apparatus 4 via the network 6.

The server apparatus 4 is an information processing apparatus having a function of performing overall control of the information processing system.

One of the functions of the server apparatus 4 is an AI service function. The AI service function is a function related to the generation of the analysis information described above. That is, it is a function of generating analysis information of a subject on the basis of processing result information of AI processing in the camera 1, and performing processing for causing the user to browse the generated analysis information via the user terminal 5.

In addition, the server apparatus 4 has a function of managing the AI model used by each camera 1. For example, each camera 1 has a function of distributing the AI model purchased by the user, a function of relearning the AI model used by each camera 1, and the like.

### (1-3. Configuration of Camera)

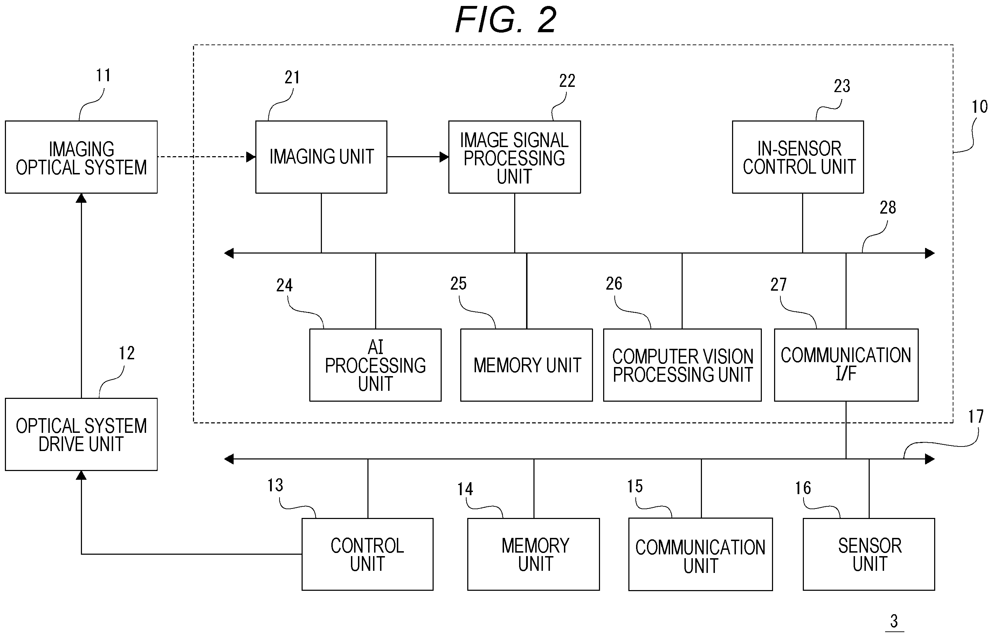

Fig. 2 is a block diagram illustrating a configuration example of the camera 1.

As illustrated, the camera 1 includes an image sensor 10, an imaging optical system 11, an optical system drive unit 12, a control unit 13, a memory unit 14, a communication unit 15, and a sensor unit 16. The image sensor 10, the control unit 13, the memory unit 14, the communication unit 15, and the sensor unit 16 are connected via a bus 17, and can perform data communication with each other.

The imaging optical system 11 includes lenses such as a cover lens, a zoom lens, and a focus lens, and a diaphragm (iris) mechanism. Light (incident light) from a subject is guided by the imaging optical system 11 and condensed on a light receiving surface of the image sensor 10.

The optical system drive unit 12 comprehensively represents drive units of the zoom lens, the focus lens, and the diaphragm mechanism included in the imaging optical system 11. Specifically, the optical system drive unit 12 includes an actuator for driving each of the zoom lens, the focus lens, and the diaphragm mechanism, and a drive circuit of the actuator.

The control unit 13 includes, for example, a microcomputer including a CPU, a ROM, and a RAM, and performs the overall control of the camera 1 by causing the CPU to perform various processes in accordance with a program stored in the ROM or a program loaded in the RAM.

For example, the control unit 13 instructs the optical system drive unit 12 to drive the zoom lens, the focus lens, the diaphragm mechanism, and the like. The optical system drive unit 12 moves the focus lens and the zoom lens, opens or closes a diaphragm blade of the diaphragm mechanism, or the like in response to such a drive instruction.

Furthermore, the control unit 13 controls the writing and reading of various types of data to and from the memory unit 14.

The memory unit 14 is a nonvolatile storage device such as a hard disk drive (HDD) or a flash memory apparatus, for example, and is used for storing data used when the control unit 13 executes various processes. Furthermore, the memory unit 14 can also be used as a storage destination (recording destination) of the image data output from the image sensor 10.

Furthermore, the control unit 13 performs various data communication with an external apparatus via the communication unit 15. The communication unit 15 in the present example is able to perform data communication with at least the fog server 3 and the other camera 1 illustrated in Fig. 1 via the local network 2.

Alternatively, the communication unit 15 is capable of communicating over the network 6, and communicates data with the server apparatus 4 in some cases.

The sensor unit 16 comprehensively represents sensors other than the image sensor 10 included in the camera 1. Examples of the sensors included in the sensor unit 16 include a global navigation satellite system (GNSS) sensor for detecting the position and altitude of the camera 1, an altitude sensor, a temperature sensor for detecting ambient temperature, and a motion sensor such as an acceleration sensor or an angular velocity sensor for detecting the motion of the camera 1.

The image sensor 10 is configured as a solid-state imaging element of a CCD type, a CMOS type, or the like, for example, and includes an imaging unit 21, an image signal processing unit 22, an in-sensor control unit 23, an AI processing unit 24, a memory unit 25, a computer vision processing unit 26, and a communication interface (I/F) 27 as illustrated in the drawing. These units can perform data communication with each other via a bus 28.

Here, the image sensor 10 is an embodiment of a sensor apparatus according to the present technology.

The imaging unit 21 includes a pixel array unit in which pixels each having a light receiving element (photoelectric conversion element) such as a photodiode are two-dimensionally arranged, and a reading circuit that reads an electric signal (light reception signal) obtained by photoelectric conversion from each pixel included in the pixel array unit.

The image signal processing unit 22 performs analog to digital (A/D) conversion of a light reception signal (imaging signal) by an analog signal read from the imaging unit 21 to obtain a captured image (captured image data) by digital data, and performs preprocessing, synchronization processing, YC generation processing, resolution conversion processing, codec processing, and the like on the captured image by the digital data.

In the preprocessing, clamp processing of clamping the black level of red (R), green (G), and blue (B) to a predetermined level, correction processing among R, G, B color channels and the like are performed on the captured image signal. In the synchronization processing, color separation processing is performed such that image data for each pixel has all the R, G, and B color components. For example, in a case of an imaging element using a Bayer color filter, demosaic processing is performed as the color separation processing. In the YC generation processing, a luminance (Y) signal and a color (C) signal are generated (separated) from the image data of R, G, and B. In the resolution conversion processing, resolution conversion processing is performed on the image data subjected to various types of signal processing.

In the codec processing, for example, encoding processing for recording or communication and file generation are performed on the image data subjected to the various types of processing described above. In the codec processing, it is possible to generate a file in a format such as moving picture experts group (MPEG)-2 or H.264 as a moving image file format. It is also conceivable to generate a file in a format such as joint photographic experts group (JPEG), tagged image file format (TIFF), or graphics interchange format (GIF) as a still image file.

The in-sensor control unit 23 includes a microcomputer including, for example, a CPU, a ROM, a RAM, and the like, and integrally controls the operation of the image sensor 10. For example, the in-sensor control unit 23 performs execution control of the imaging operation by issuing an instruction to the imaging unit 21. In addition, execution control of processing is also performed on the AI processing unit 24, the image signal processing unit 22, and the computer vision processing unit 26.

Furthermore, in particular, in the case of the present embodiment, the in-sensor control unit 23 performs control for distributing the processing executed by the AI processing unit 24 with another camera 1 (another image sensor 10), but this will be described again.

The AI processing unit 24 includes a programmable arithmetic processing apparatus such as a CPU, a field programmable gate array (FPGA), or a digital signal processor (DSP), and performs AI processing on a captured image.

Examples of the AI processing by the AI processing unit 44 include object detection processing of detecting the presence or absence of any object regardless of the type of the subject, and image recognition processing of recognizing a subject as a specific target such as a person or a vehicle.

The function of the AI processing by the AI processing unit 44 can be switched by changing the AI model (algorithm of the AI processing).

Here, various function types of image recognition performed as AI processing can be considered, and for example, function types as exemplified below can be exemplified.
· Class identification
· Semantic segmentation
· Human detection
· Vehicle detection
· Target tracking
· Optical character recognition (OCR)

Among the above function types, the class identification is a function of identifying a class of the target. The term "class" described herein refers to information indicating a category of an object, and refers to, for example, classifications such as "person", "automobile", "airplane", "ship", "truck", "bird", "cat", "dog", "deer", "frog", "horse", and the like.

The target tracking is a function of tracking a target subject, and can be also described as a function of obtaining history information of the location of the subject.

The memory unit 25 is used to store data necessary for performing AI processing by the AI processing unit 24. Specifically, the setting data (for example, various weighting coefficients used in a convolution operation in a neural network such as a convolutional neural network (CNN), data indicating a neural network structure, and the like) of the AI model is stored in the memory unit 25.

Furthermore, in the present example, the memory unit 25 is also used to hold captured image data processed by the image signal processing unit 22.

The computer vision processing unit 26 performs rule-based image processing as image processing on the captured image data. Examples of the rule-based image processing given here include super-resolution processing and the like.

The communication interface 27 is an interface that communicates with each unit connected via the bus 17, such as the control unit 13 and the memory unit 14 outside the image sensor 10. For example, the communication interface 27 performs communication for acquiring an AI model and the like used by the AI processing unit 24 from the outside on the basis of the control of the in-sensor control unit 23.

Furthermore, processing result information of the AI processing by the AI processing unit 24 is output to the outside of the image sensor 10 via the communication interface 27.

Here, in the image sensor 10, the in-sensor control unit 23 can perform data communication via the local network 2 with the image sensor 10 (in-sensor control unit 23) and the fog server 3 in another camera 1 via the communication interface 27 and the communication unit 15.

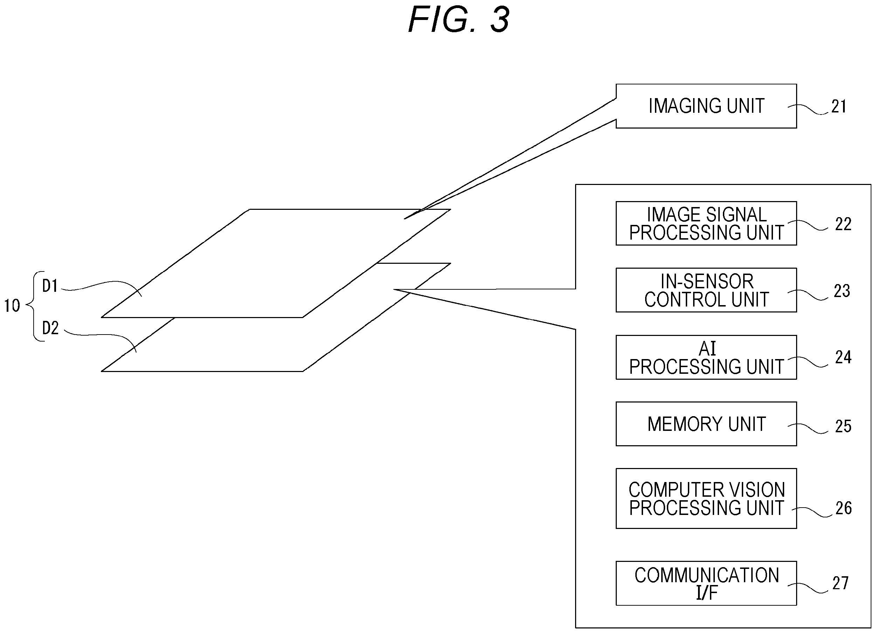

Meanwhile, as described above, in the present example, the image sensor 10 includes the AI processing unit 24 that performs AI processing, the in-sensor control unit 23 as a computer apparatus, and the like, in addition to the imaging unit 21 including the pixel array unit. A structure example of such an image sensor 10 will be described with reference to Fig. 3. Note that the structure illustrated in Fig. 3 is merely an example, and other structures can be adopted as a matter of course.

As illustrated in Fig. 3, the image sensor 10 in the present example has a two-layer structure (laminated structure) in which two dies of a die D1 and a die D2 are laminated. Specifically, the image sensor 10 in the present example is configured as a semiconductor apparatus in which the die D1 and the die D2 are bonded together. The die D1 is a die in which the imaging unit 21 is formed, and the die D2 is a die including the image signal processing unit 22, the in-sensor control unit 23, the AI processing unit 24, the memory unit 25, the computer vision processing unit 26, and the communication interface 27. Here, the die D1 and the die D2 can be paraphrased as a semiconductor layer formed by a semiconductor process.

The die D1 and the die D2 are bonded by, for example, a predetermined inter-chip bonding technique for physically and electrically bonding two semiconductor chips, such as Cu-Cu bonding.

### (1-3. Processing Distribution Method as First Embodiment)

In the present embodiment, as illustrated in Fig. 1, processing executed by the AI processing unit 24 is distributed in a sensor group in which a plurality of cameras 1 (image sensors 10) is communicably connected.

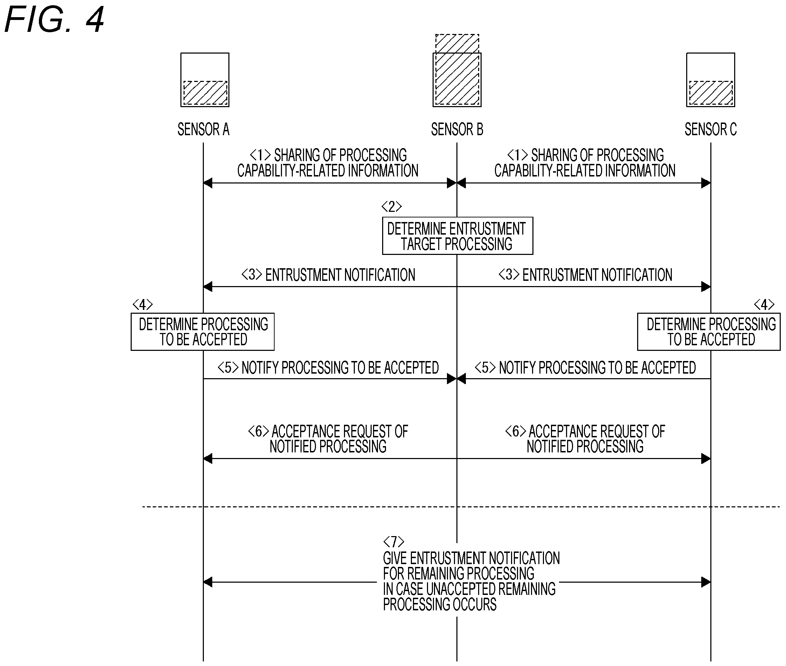

Hereinafter, a processing distribution method as the first embodiment will be described with reference to Fig. 4.

The processing distribution method as the first embodiment is a method in which the image sensor 10 having no surplus processing capability (processing has overflowed) entrusts the processing exceeding the processing capability (processing having overflowed) to another image sensor 10.

Note that, in the following description, the execution entity of the processing of the image sensor 10 is the in-sensor control unit 23 illustrated in Fig. 2.

Fig. 4 illustrates an example in which the sensor group includes three image sensors 10 of sensors A, B, and C as an illustrative example.

In the drawing, in the frames illustrated for each of the sensors A, B, and C, the solid line frame is the "allowable processing amount" of the sensor, and the hatched dotted line frame is the "processing amount in charge" of the sensor.

Here, the "allowable processing amount" means an upper limit amount of a processing amount of a task that can be undertaken with the processing capability of the sensor.

In addition, the "processing amount in charge" means a total processing amount for processing actually undertaken (in charge) by the sensor.

In the following description, the index value indicating the surplus of the processing capability of the image sensor 10 derived from the relationship between the allowable processing amount and the processing amount in charge is referred to as a "processing capability surplus value". The processing capability surplus value can be calculated as, for example, "allowable processing amount - processing amount in charge". Alternatively, it is also conceivable to calculate the processing capability surplus value as a ratio of the processing amount in charge to the allowable processing amount or the like.

Here, in calculating the processing capability surplus value as described above, it is conceivable to calculate the processing amount in charge on the basis of the size of the vector matrix in the processing, the number of operations, and the number of operations (FLOPS) of the numerical value.

In the example in the drawing, the sensors A and C are sensors in which the processing amount in charge is smaller than the allowable processing amount and there is a surplus in processing capability. On the other hand, in the sensor B, the processing amount in charge is larger than the allowable processing amount, and there is no surplus of processing capability.

First, in the processing distribution method as the first embodiment, each image sensor 10 in the sensor group performs processing of sharing "processing capability-related information", which is information including at least the processing capability surplus value of the own sensor, with each of the other image sensors 10 in response to a change in the processing capability surplus value of the own sensor by a predetermined value or more (<1> in the drawing). In this sharing processing, the processing capability-related information is transmitted to each of the other image sensors 10, and the processing capability-related information is received from each of the other image sensors 10.

In the present example, the "processing capability-related information" includes a surplus memory capacity and "environmental information" in addition to the processing capability surplus value.

The surplus memory capacity described above indicates a surplus of the capacity (in the present example, the capacity of the memory unit 25 is the capacity that can be used by the AI processing unit 24 in its own processing) of the memory that can be used by the AI processing unit 24 in its own processing. The surplus memory capacity can be calculated on the basis of the capacity of the memory that can be used by the AI processing unit 24 in its own processing and the amount of data (data type × number of data) to be processed in the processing in charge.

Furthermore, the above-described "environment information" broadly means information indicating the operation environment of the AI processing unit 24. Specifically, the environment information includes
- Communication quality between sensors (band, latency amount, fluctuation, error rate)
- Sensor temperature
- Quality of power supply to sensor (battery remaining amount, is AC power supply connected?)
and the like.

Note that, regarding the processing capability-related information, it is conceivable that the processing capability-related information shared by the image sensor 10 in which the surplus of the processing capability has occurred to other sensors includes information indicating a cause of the occurrence of the surplus of the processing capability.

In the sensor group, the image sensor 10 having no surplus of processing capability like the sensor B executes the sharing processing of <1>, and then performs processing of determining processing desired to be entrusted (hereinafter, referred to as "entrustment target processing") as indicated by <2> in the drawing.

For this entrustment target processing, basically, processing to be entrusted to another sensor is determined so that the overflow state of the own sensor is resolved from among the processing that the own sensor is in charge of. Here, regarding the entrustment target processing, a single processing may be determined, or a plurality of processing may be determined.

Various specific methods for determining the entrustment target processing can be considered.

For example, it is conceivable to determine the entrustment target processing on the basis of the processing capability surplus value of each image sensor 10 other than the own sensor shared in the sharing processing of <1>, the processing amount in charge of the own sensor, and the "environment information" of each image sensor 10.

Then, the image sensor 10 that has determined the entrustment target processing makes an entrustment notification of the entrustment target processing to each of the other image sensors 10 as indicated by <3> in the drawing. That is, it is a notification that the entrustment target processing is entrusted.

Hereinafter, the image sensor 10 that has made an entrustment notification of the entrustment target processing to the other image sensors 10 will be referred to as an "entrustment notification source sensor".

Note that it is also conceivable that the entrustment notification source sensor notifies the cause of the entrustment together with the above-mentioned entrustment notification.

The image sensor 10 (hereinafter, referred to as an "acceptance candidate sensor") that has received the above entrustment notification determines the processing to be accepted as indicated by <4> in the drawing. That is, regarding the processing of which the entrustment notification is given, the processing to be accepted is determined on the basis of at least the processing amount required for the processing and the processing capability surplus value of the own sensor. Note that, in the determination of the processing to be accepted, it can be determined that there is no processing to be accepted depending on the processing capability surplus value of the own sensor and the processing amount of the processing for which the entrustment notification has been given.

Here, the determination of the processing to be accepted is only required to be basically performed on the basis of the relationship between the processing capability surplus value of the own sensor and the processing amount of the processing for which the entrustment notification has been given as described above, but it is also conceivable that the determination of the processing to be accepted is performed using "environment information" shared by <1> in addition to the processing capability surplus value of the own sensor and the processing amount of the processing for which the entrustment notification has been given.

The acceptance candidate sensor that has determined the processing to be accepted notifies the entrustment notification source sensor of the processing to be accepted as indicated by <5> in the drawing. In this notification, a notification indicating that there is no processing to be accepted can also be made.

In response to receiving the notification of the processing to be accepted from the acceptance candidate sensor, the entrustment notification source sensor gives an acceptance request of the notified processing to the acceptance candidate sensor as the notification source as indicated by <6> in the drawing.

Although not illustrated, in the acceptance candidate sensor that has received the acceptance request for the processing from the entrustment notification source sensor, the processing requested to be accepted is executed by the AI processing unit 24. In response to completion of the processing, the acceptance candidate sensor transmits (replies) processing result information indicating a processing result of the processing to the entrustment notification source sensor.

At this time, it is conceivable that the acceptance candidate sensor that has received the acceptance request from the entrustment notification source sensor notifies another image sensor 10 of the processing accepted by the own sensor.

Here, depending on the processing capability surplus in the acceptance candidate sensor, not all the processing requested by the entrustment notification source sensor is accepted. In this case, in the entrustment notification source sensor, so-called "remaining processing" in which the acceptance destination is not yet determined among the processing determined as the entrustment target processing occurs.

In a case where such remaining processing occurs, the entrustment notification source sensor makes an entrustment notification of the remaining processing as indicated by <7> in the drawing. Specifically, the entrustment notification source sensor makes an entrustment notification of the remaining processing to each of the other image sensors 10 until all the remaining processing is accepted.

In the sensor group, in a case where there is no processing capability surplus in any of the image sensors 10, the processing of <1> to <7> described above is performed.

As a result, efficient processing based on the processing capability surplus in each image sensor 10 can be distributed, and it is possible to prevent any image sensor 10 from being left in the overflow state and not being able to complete the AI processing.

Furthermore, in the present embodiment, a configuration is adopted in which processes are interchanged among the plurality of image sensors 10 on the basis of the processing capability surplus. As a result, the efficiency of the processing executed by the AI processing unit 24 is improved in the entire sensor group. As the efficiency is improved, the processing amount of the AI processing can be increased in each image sensor 10, and more highly functional AI processing can be executed. In addition, as the processing efficiency is improved, as a result, the speed of the AI processing is increased.

Furthermore, since the configuration in which the processes are interchanged among the plurality of image sensors 10 as in the present embodiment is adopted, the robustness of the AI processing is also improved. Specifically, in order to prevent the occurrence of the overflow of the processing in the image sensor 10, for example, it is conceivable to adopt a configuration in which an external apparatus other than the image sensor 10 such as the fog server 3 accepts the processing exceeding the processing capability from the image sensor 10 and executes the processing. However, in that case, in a case where the external apparatus overflows, the AI processing cannot be completed even if there is a processing capability surplus in the other image sensor 10. Therefore, the robustness of the AI processing can be improved as compared with such a case.

Here, there is a possibility that the image sensor 10 newly participates in the sensor group in association with, for example, addition of a new camera 1 in the information processing system, activation of the camera 1 that has been electrically disconnected, or the like.

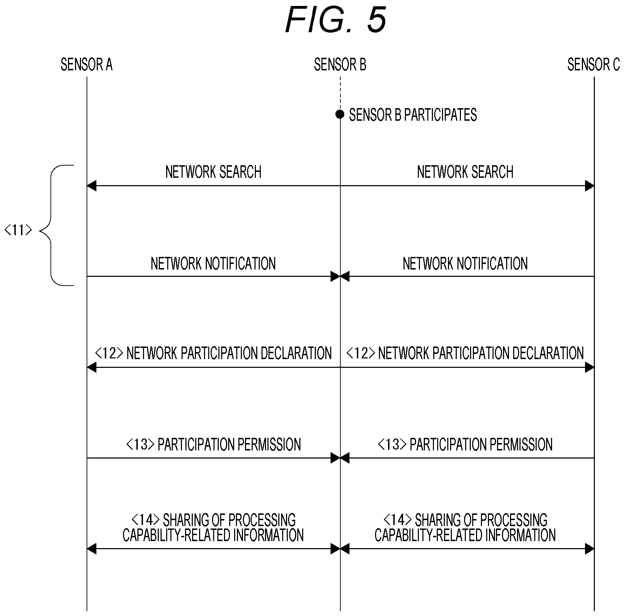

Fig. 5 is a diagram illustrating processing executed by each image sensor 10 in a case where the image sensor 10 newly participates.

This drawing illustrates a processing example in a case where the image sensor 10 as the sensor B newly participates in a sensor group including two image sensors 10 as the sensors A and C.

First, the image sensors 10 participating in the sensor group and the other image sensors 10 connected to the local network 2 (that is, the already-participated image sensors 10 already participating in the sensor group) perform network search and network notification, respectively, as indicated by <11> in the drawing. Specifically, the image sensors 10 participating in the sensor group search for other image sensors 10 connected to the local network 2, while each of the already-participated image sensors 10 notifies the presence thereof.

In a case where another image sensor 10 connected to the local network 2 is discovered, the image sensor 10 participating in the sensor group declares participation in the sensor group to the discovered image sensor 10 as indicated by <12> in the drawing (network participation declaration).

On the other hand, the already-participated image sensor 10 which has received such a participation declaration notifies the participation permission to the image sensor 10 which is the declaration source as indicated by <13> in the drawing. The notification of the participation permission is actually performed after verifying the qualification of the image sensor 10 declared to participate.

The image sensor 10 permitted to participate executes processing of sharing the above-described processing capability-related information with the already-participated image sensor 10 (the image sensor 10 that has given participation permission) in response to establishment of a subsequent predetermined condition (for example, a predetermined time has elapsed, AI processing by the AI processing unit 24 has started, or the like).

In a case where the image sensor 10 newly participates in the sensor group, after the processing described with reference to Fig. 5 above is executed, in a case where an overflow of the processing occurs in any one of the image sensors 10, the processing illustrated in Fig. 4 is executed in the entire sensor group including the image sensor 10 newly participating.

Furthermore, in the sensor group, it is conceivable that any of the image sensors 10 is separated from the sensor group due to electrical disconnection or the like.

In a case where any of the image sensors 10 is separated from the sensor group, handling of processing accepted from the separated image sensor 10 and processing requested to the separated image sensor 10 should be considered.

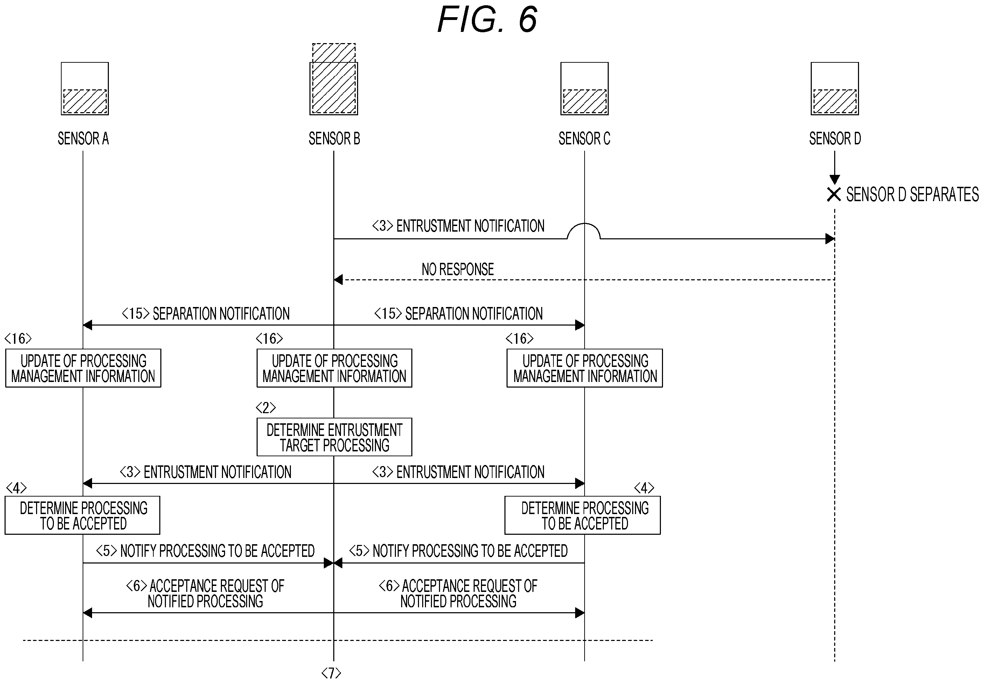

Fig. 6 is a diagram illustrating a processing example corresponding to a case where the image sensor 10 is separated.

Fig. 6 illustrates a case where the sensor D is separated from the sensor group including the sensors A, B, C, and D.

By the processing of Fig. 4 described above, the image sensor 10 (the sensor B in the drawing) having no processing capability surplus, that is, the image sensor 10 as the above-described entrustment notification source sensor, gives the entrustment notification of the entrustment target processing to each of the other image sensors 10 (<3>) . However, in a case where any of the image sensors 10 is separated due to electrical disconnection or the like, a response to the entrustment notification from the image sensor 10 cannot be obtained. In a case where there is an image sensor 10 that does not respond to the entrustment notification as described above, the entrustment notification source sensor determines that the image sensor 10 has separated from the sensor group.

Then, as indicated by <15> in the drawing, a separation notification for notifying the separated image sensor 10 to each of the other image sensors 10 is performed.

As indicated by <16> in the drawing, the image sensor 10 (entrustment notification source sensor) that has made the separation notification and each image sensor 10 that has received the separation notification update the processing management information Im.

Here, the processing management information Im is information for managing the breakdown of the responsible entity for the AI processing to be performed on the captured image of the own sensor. Specifically, the processing management information Im is information for managing the breakdown of the responsible entity of the processing regarding the AI processing to be performed on the captured image of the own sensor. For example, regarding the AI processing to be performed on the captured image of the own sensor, the own sensor is in charge of the processing X among them, the sensor A is in charge of the processing Y, the sensor D is in charge of the processing Z, and the like.

As the update processing of the processing management information Im of <16>, in a case where the processing of the image sensor 10 from which the responsible entity is separated is managed in the processing management information Im, processing of changing the responsible entity of the process to the own sensor is performed.

Here, in each image sensor 10, as the management information for managing the processing, the accepted processing management information is stored in addition to the above-described processing management information Im. The accepted processing management information is information for managing processing accepted from another image sensor 10 and the image sensor 10 of the entrustment source.

Each image sensor 10 refers to the processing management information Im and the accepted processing management information in calculating the processing amount in charge of the own sensor. Specifically, the total of the processing amounts of all the processes managed in the processing management information Im assuming that the responsible entity is the own sensor and the processing amounts of all the processes managed in the accepted processing management information is calculated as the processing amount in charge.

Here, for confirmation, in the present example, the processing management information Im is updated according to the separation of the image sensor 10, but the accepted processing management information is not updated. Therefore, in a case where there is processing accepted from the separated image sensor 10, the processing amount in charge to the own sensor is calculated including the processing. In other words, the processing accepted from the separated image sensor 10 is set as the execution target without being discarded.

Note that the handling of the processing accepted from the separated image sensor 10 is not limited thereto, and may be discarded. In this case, the processing accepted from the separated image sensor 10 is only required to be deleted in the above-described accepted processing management information.

In this case, the entrustment notification source sensor performs the update processing of the processing management information Im of <16> and then determines the entrustment target processing of <2>.

Thereafter, the flow of processing of the image sensors 10 as the entrustment notification source sensor and the acceptance candidate sensor is similar to that described in Fig. 4.

However, in the image sensor 10 in this case, when it is assumed that the processing accepted from the separated image sensor 10 is taken over without being discarded as in the present example, in response to completion of the accepted processing from the separated image sensor 10, processing of outputting the processing result to an external apparatus such as the fog server 3 is performed in place of the separated image sensor 10.

Here, in the update of the processing management information Im of <16>, it is desirable to discard the processing that cannot meet the completion deadline due to the processing entrusted to the separated image sensor 10.

In the present example, the processing executed by the AI processing unit 24 is associated with completion deadline information indicating the completion deadline. As the completion deadline here, a deadline according to the nature is determined for each process.

For example, in a case where movement of an individual person is analyzed by AI processing, processing of recognizing which class the person belongs to should be accurately performed even if it takes time, that is, it is best effort type processing. On the other hand, the processing of detecting the person in order to track the movement of the person is real-time processing in which real-time property is required. For example, in a case where there are tasks belonging to the best effort type and real-time type processes, the completion deadline of the task belonging to the former is set to be relatively long, and the completion deadline of the task belonging to the latter is set to be relatively short.

### (1-4. Processing Procedure)

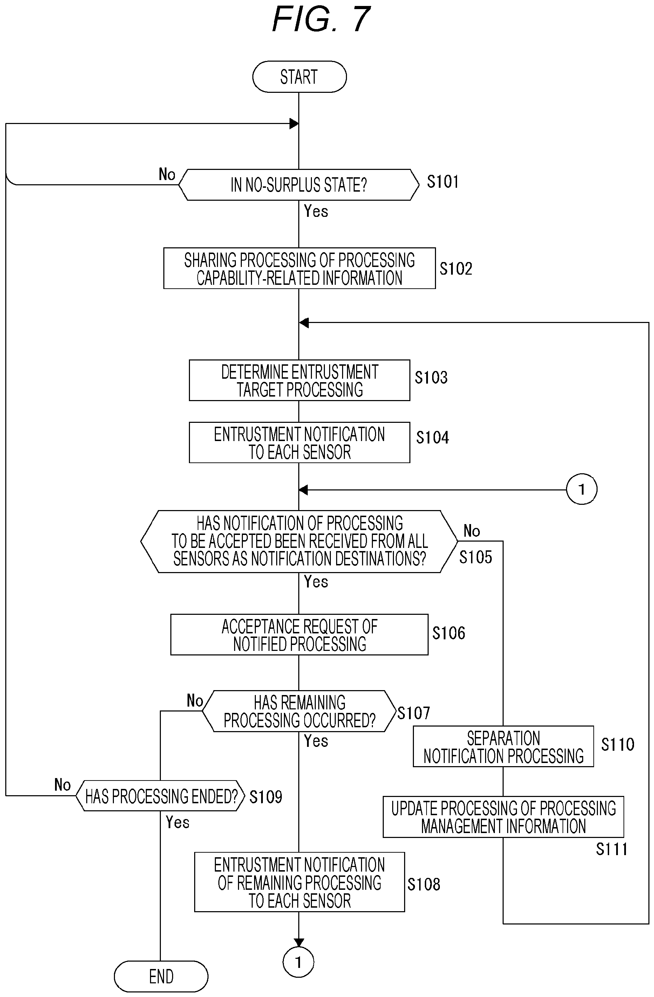

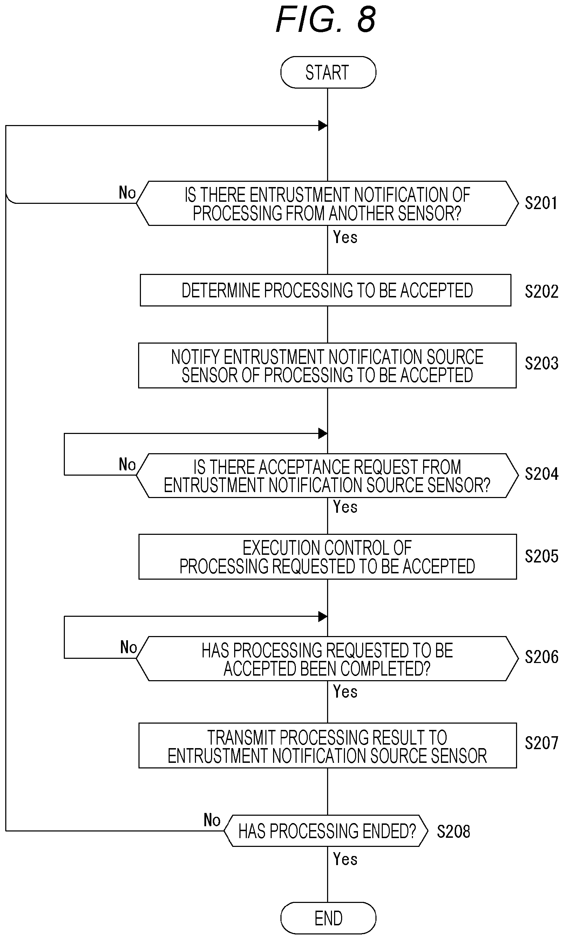

An example of a specific processing procedure to be executed in each image sensor 10 in order to realize the processing distribution method as the first embodiment described above will be described with reference to flowcharts of Figs. 7 and 8.

The processing illustrated in Figs. 7 and 8 is executed on the basis of a program stored in a predetermined storage apparatus such as a ROM included in the in-sensor control unit 23 of the image sensor 10.

Note that the in-sensor control unit 23 in each image sensor 10 executes the processing at the time of participation described above with reference to Fig. 5 as processing different from the processing illustrated in Figs. 7 and 8.

Fig. 7 illustrates processing corresponding to the entrusting side.

First, in step S101, the in-sensor control unit 23 determines whether or not there is no-surplus state. That is, the processing capability surplus value is calculated on the basis of the allowable processing amount and the processing amount in charge to the own sensor, and it is determined whether or not the own sensor is in the no-surplus state on the basis of the processing capability surplus value. Specifically, in a case where "allowable processing amount - processing amount in charge" is calculated as the processing capability surplus value, it is conceivable to perform this determination as determination as to whether or not the calculated value is 0 or less. In addition, in a case where the ratio (%) of the processing amount in charge to the allowable processing amount is calculated as the processing capability surplus value, it is conceivable to perform the determination as to whether or not the calculated ratio is 100% or more.

In step S101, in a case where it is determined that there is surplus state, the in-sensor control unit 23 performs the determination processing of step S101 again, and in a case where it is determined that there is no-surplus state, the processing proceeds to step S102.

In step S102, the in-sensor control unit 23 performs sharing processing of the processing capability-related information. That is, as described as <1> in Fig. 4, processing of sharing the processing capability-related information (in the present example, the processing capability surplus value, the surplus memory capacity, and the environmental information) with each of the other image sensors 10 is performed.

In step S103 following step S102, the in-sensor control unit 23 determines entrustment target processing. That is, the processing to be entrusted to each of the other image sensors 10 is determined on the basis of at least the processing capability-related information of the own sensor. Note that it is also conceivable to determine the entrustment target processing on the basis of not only the processing capability-related information of the own sensor but also the processing capability-related information received from each of the other image sensors 10 in the sharing processing in step S102.

In step S104 subsequent to step S103, the in-sensor control unit 23 notifies each of the other image sensors 10 to entrust the entrustment target processing determined in step S103 as the entrustment notification to each of the sensors.

In step S105 subsequent to step S104, the in-sensor control unit 23 determines whether or not notification of processing to be accepted from all the sensors as notification destinations has been received. This corresponds to a process of determining the presence or absence of the separated image sensor 10.

In step S105, in a case where it is determined that the notification of the processing to be accepted has not been received from all the sensors as the notification destinations (that is, in a case where it is estimated that there is a separated image sensor 10), the in-sensor control unit 23 proceeds to step S110 and executes the separation notification processing. That is, a process of notifying each of the other image sensors 10 of the image sensor 10 from which the notification of the processing to be accepted has not been received as the separated image sensor 10 is performed.

Further, the in-sensor control unit 23 executes update processing of the processing management information Im in step Sill following step S110. In other words, in a case where processing that is the image sensor 10 from which the responsible entity is separated is managed in the processing management information Im, processing of changing the responsible entity of the processing to the own sensor is performed.

As described above, the update processing of the processing management information Im is also executed in each of the other image sensors 10 that have received the separation notification.

Furthermore, as described above, in the update processing of the processing management information Im, it is possible to discard processing that cannot meet the completion deadline due to the processing entrusted to the separated image sensor 10.

In response to executing the update processing of the processing management information Im in step Sill, the in-sensor control unit 23 returns to step S103. As a result, in the entrustment notification source sensor, in a case where there is the separated image sensor 10, it is possible to determine the entrustment target processing again in consideration of the processing accepted to the separated image sensor 10 from the own sensor.

Furthermore, in step S105 described above, in a case where it is determined that the notification of the processing to be accepted from all the sensors as the notification destinations has been received (that is, in a case where it is estimated that there is no separated image sensor 10), the in-sensor control unit 23 proceeds to step S106 and makes an acceptance request of the notified processing. That is, as described as <6> in Fig. 4, in response to reception of the notification of the processing to be accepted from each of the other image sensors 10 (acceptance candidate sensors) that have given the entrustment notification, the acceptance request for the notified processing is made to the image sensor 10 as the notification source.

In step S107 following step S106, the in-sensor control unit 23 determines whether or not remaining processing has occurred. That is, it is determined whether or not there is remaining processing as processing that has not been accepted by any image sensor 10 among the entrustment target processing determined in step S103.

In a case where it is determined in step S107 that the remaining processing has occurred, the in-sensor control unit 23 proceeds to step S108, makes an entrustment notification of the remaining processing to each sensor, and returns to step S105. As a result, it is possible to repeatedly make an entrustment notification of the remaining processing to each of the other image sensors 10 until all the remaining processing is accepted.

On the other hand, in a case where it is determined in step S107 that the remaining processing has not occurred, the in-sensor control unit 23 proceeds to step S109 and determines whether or not the processing has ended. Specifically, it is determined whether or not a predetermined condition defined in advance as an end condition of the AI processing, such as the own sensor being electrically disconnected, is satisfied.

In a case where it is determined in step S109 that the processing is not ended, the in-sensor control unit 23 returns to step S101.

On the other hand, in a case where it is determined in step S109 that the process is ended, the in-sensor control unit 23 ends the series of processes illustrated in Fig. 7.

Fig. 8 illustrates processing corresponding to the accepting side.

In Fig. 8, in step S201, the in-sensor control unit 23 waits for a processing entrustment notification from another sensor. That is, this is processing for waiting for the entrustment notification of the entrustment target processing executed by the other image sensor 10 in step S104 of Fig. 7.

In step S201, in a case where there is a processing entrustment notification from another sensor, the in-sensor control unit 23 determines processing to be accepted in step S202. That is, regarding the processing of which the entrustment notification is given, the processing to be accepted is determined on the basis of at least the processing amount required for the processing and the processing capability surplus value of the own sensor.

In step S203 subsequent to step S202, the in-sensor control unit 23 notifies the entrustment notification source sensor of the processing to be accepted. Note that, as described above, it can be determined that there is no processing to be accepted, depending on the processing capability surplus value of the own sensor and the processing amount of the processing for which the entrustment notification has been given. In this case, notification indicating that there is no processing to be accepted is given as the notification in step S203.

In step S204 subsequent to step S203, the in-sensor control unit 23 waits for the acceptance request from the entrustment notification source sensor, and in a case where there is the acceptance request, the processing proceeds to step S205, and the execution control of the processing requested to be accepted is performed. That is, control is performed such that the processing requested to be accepted is executed in the AI processing unit 24.

In step S206 subsequent to step S205, the in-sensor control unit 23 waits until the processing requested to be accepted is completed, and in a case where the processing requested to be accepted is completed, performs processing of transmitting the processing result to the entrustment notification source sensor in step S207.

In step S208 subsequent to step S207, the in-sensor control unit 23 determines whether or not the processing has been completed, and in a case where it is determined that the processing has not been completed, the processing returns to step S201, and continues to wait for a processing entrustment notification from another sensor.

On the other hand, in a case where it is determined in step S208 that the processing has been ended, the in-sensor control unit 23 ends the series of processes illustrated in Fig. 8.

The in-sensor control unit 23 of each image sensor 10 in the sensor group executes the processing of Figs. 7 and 8 described above, thereby implementing the processing distribution method as the first embodiment described with reference to Figs. 4 and 6.

### <2. Second Embodiment>

Next, the second embodiment will be described.

In the second embodiment, processing to be executed is determined on the basis of the priority of the processing.

Note that, in the second embodiment, since the configuration of the information processing system and the configurations of the camera 1 and the image sensor 10 are similar to those of the first embodiment, the description thereof will be omitted. In addition, in the following description, the same reference signs and the same step numbers are given to portions similar to those already described, and description thereof is omitted.

Here, in a case where a use is assumed in which a plurality of cameras 1 as AI cameras is installed to analyze a target, there is a case where it is possible to determine priority for AI processing of each image sensor 10 depending on an arrangement positional relationship of each camera 1 (arrangement positional relationship of each image sensor 10), what kind of subject is targeted, and the like.

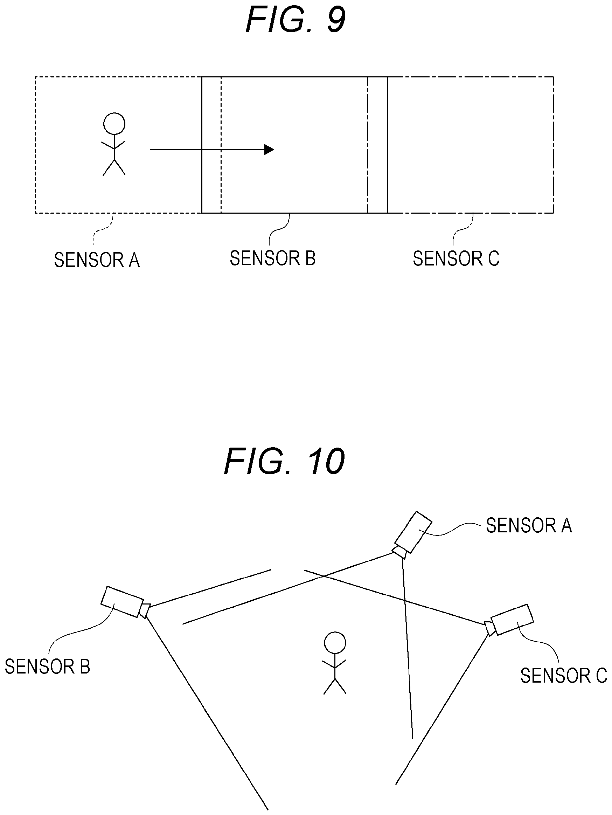

For example, Fig. 9 illustrates a case where the premise that the target subject always passes through the imaging range of the sensor B and the imaging range of the sensor C in this order after appearing within the imaging range of the sensor A is satisfied.

In this case, in a state where the target subject is captured only within the imaging range of the sensor A and is not yet captured within the imaging range of the sensor B or the sensor C, it can be said that the AI processing of the sensor A should be performed in preference to the AI processing of the other sensors B and C.

Furthermore, Fig. 10 illustrates an example in which the imaging ranges of the sensor A, the sensor B, and the sensor C overlap. In this case, if each of the sensor A, the sensor B, and the sensor C performs the AI processing on the same subject, it can be regarded that the AI processing overlaps. Therefore, it is conceivable to avoid the overlapping of the processing by increasing the priority of only the AI processing of any sensor and decreasing the priority of the AI processing of the other sensors.

By prioritizing the processing, it is possible to exclude processing with low priority from processing to be executed among AI processing existing as tasks. Alternatively, it is also conceivable to reduce the processing amount to be executed by reducing the weight of the processing.

In any case, if the processing to be executed is determined on the basis of the priority of the processing, it is possible to reduce the processing amount to be executed in the image sensor 10, that is, it is possible to increase the processing capability surplus.

Specifically, it is conceivable to determine the priority on the basis of an arrangement positional relationship with other image sensors 10.

Furthermore, it is conceivable to determine the priority on the basis of the relationship of the number of target recognition in the target image of the AI processing among other image sensors 10. For example, it is conceivable to determine the priority so that the AI processing in the image sensor 10 having a large number of target recognition is prioritized over the AI processing in the image sensor 10 having a small number of target recognition.

Here, an example in which the priority is determined on the basis of the arrangement positional relationship of the image sensor 10 and the number of target recognition will be described.

For example, as in the example of Fig. 9, in a case where upstream and downstream of the flow of the subject to be targeted are defined from the arrangement positional relationship of the respective image sensors 10, in a case where the number of target recognition in the upstream image sensor 10 is smaller than the number of target recognition in the downstream image sensor 10, the priority of the feature analysis processing (for example, feature analysis processing of age, gender, and the like) of the target in the upstream image sensor 10 is set higher than the priority of the feature analysis processing of the target in the downstream image sensor 10.

As a result, processing in the upstream image sensor 10 can be preferentially performed.

Furthermore, it is conceivable to determine the priority on the basis of a relationship of the feature amount of the target recognized by the AI processing among other image sensors 10.

As a result, for example, in a case where other image sensors 10 also perform processing on targets having the same feature amount, that is, subjects estimated to be the same subject, it is possible to avoid overlapping of the processing by setting the priority of the processing of any one of the image sensors 10 to be lower than the priority of the processing of another image sensor 10.

Furthermore, it is conceivable to determine the priority on the basis of the relationship of the resolution of the target image of the AI processing among other image sensors 10.

As a result, for example, in the case of Fig. 10, the AI processing for the high-resolution image can be preferentially performed by setting the priority so that the processing in the image sensor 10 in which the resolution of the target image of the AI processing is high is prioritized over the AI processing in the image sensor 10 in which the resolution of the target image is low.

Here, an example in which the priority is determined on the basis of the feature amount of the target and the resolution of the target image of the AI processing will be described.

Here, it is assumed that the imaging ranges of the image sensors 10 overlap each other as in the example of Fig. 10. Then, in the sensor group in this case, it is assumed that the resolution of the captured image in one image sensor 10 is higher than that of any other image sensor 10.

Under this assumption, in a case where a target (hereinafter, referred to as a "target P") having the same feature amount as the target recognized by the image sensor 10 having the highest resolution is also recognized by another image sensor 10, the priority of the feature analysis processing for the target P in the image sensor 10 having the highest resolution is set higher than the priority of the feature analysis processing for the target P in the other image sensor 10.

As a result, the target analysis processing using the captured image having the highest resolution can be preferentially performed, and an accurate analysis result can be obtained.

Note that the above-described example of the priority is merely an example. For example, it is also conceivable to lower the priority of processing in the image sensor 10 in which a captured image cannot be obtained due to a failure or the like, processing in the image sensor 10 in which a captured image cannot be appropriately obtained due to adhesion of dirt or the like to a lens, or the like.

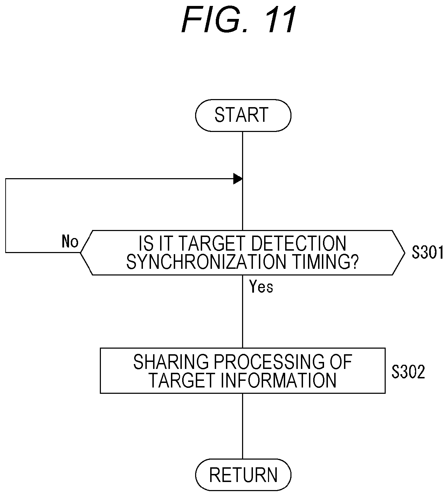

With reference to the flowcharts of Figs. 11 to 13, an example of processing to be executed by the image sensor 10 in order to implement the processing distribution method based on the priority as exemplified above will be described.

Fig. 11 illustrates processing for sharing information related to a target between the image sensors 10.

First, the in-sensor control unit 23 waits for the target detection synchronization timing in step S301. The target detection synchronization timing is determined as a timing at which a predetermined condition such as an elapsed time, a date and time, and a trigger from the outside of the image sensor 10 is satisfied.

In a case where it is determined in step S301 that it is the target detection synchronization timing, the in-sensor control unit 23 proceeds to step S302 and performs target information sharing processing. That is, the processing is processing of sharing target information, which is information regarding the recognized target, such as the type, number, and feature amount of the target recognized in the AI processing, with other image sensors 10. Specifically, the target information in the own sensor is transmitted to each of the other image sensors 10, and the target information transmitted from each of the other image sensors 10 is received.

The in-sensor control unit 23 returns to step S301 in response to the execution of the processing of step S302. That is, the target information sharing processing is executed at each target detection synchronization timing.

By executing the processing in Fig. 11 described above in each image sensor 10, each image sensor 10 can acquire information related to a target recognized by other image sensors 10. As a result, in each image sensor 10, it is possible to prioritize processing using the information regarding the target (for example, the number of targets, the feature amount, and the like) as exemplified above.

Here, in a case where the information on the arrangement positional relationship of each image sensor 10 is used in the case of performing the prioritization, the in-sensor control unit 23 of each image sensor 10 acquires information indicating each arrangement position from other image sensors 10, for example, and uses the information for the prioritization of processing.

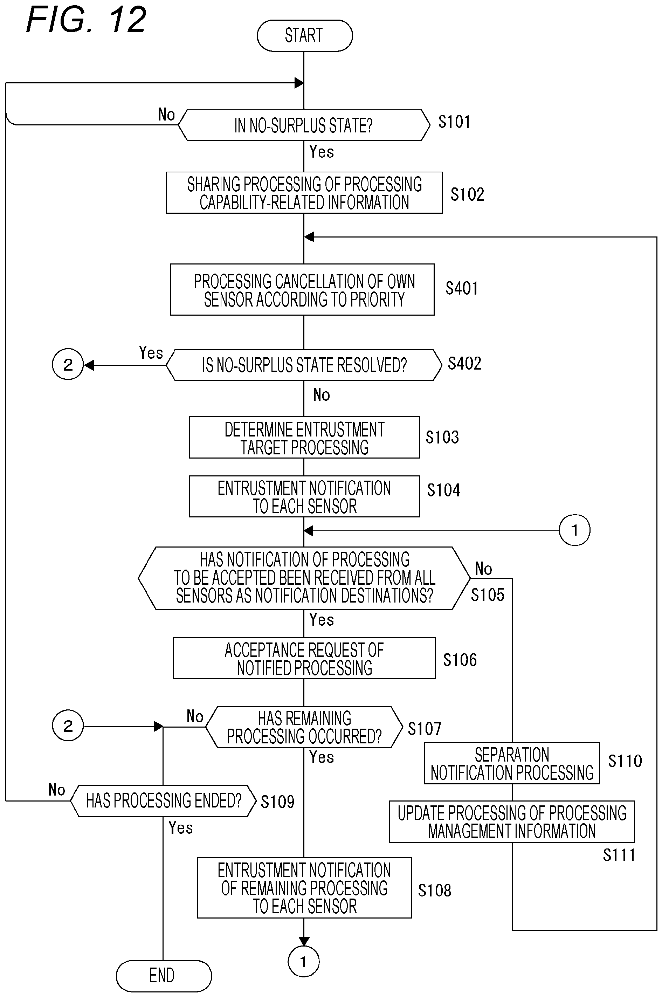

Fig. 12 illustrates a processing example on the entrusting side in a case where the processing to be entrusted is determined on the basis of the priority.

In this case, the in-sensor control unit 23 advances the processing to step S401 in response to execution of the processing capability-related information sharing processing in step S102.

In step S401, the in-sensor control unit 23 cancels the processing of the own sensor according to the priority. Specifically, in a case where there is processing having a priority equal to or lower than a predetermined value among the processing that the own sensor is in charge of, the processing having the priority equal to or lower than the predetermined value is excluded from the processing that the own sensor is in charge of.

In step S402 following step S401, the in-sensor control unit 23 determines whether or not the no-surplus state is resolved. That is, it is determined whether or not the processing amount in charge to the own sensor is smaller than the allowable processing amount of the own sensor.

In a case where it is determined in step S402 that the no-surplus state is resolved, the in-sensor control unit 23 proceeds to step S109 and determines whether or not the processing is ended. That is, in this case, as a result of the reduction of the processing amount in charge in the cancel processing in step S401, the no-surplus state is resolved, and thus, the entrustment notification or the acceptance request of the processing is not performed to the other image sensors 10.

On the other hand, in a case where it is determined in step S402 that the no-surplus state is not canceled, the in-sensor control unit 23 advances the processing to step S103. That is, if the no-surplus state is not resolved, similarly to the case of Fig. 7 described above, the entrustment notification or the acceptance request of the processing is performed to another image sensor 10.

Note that, in Fig. 12, the processing after step S103 is similar to that in the case of Fig. 7, and thus redundant description is avoided.

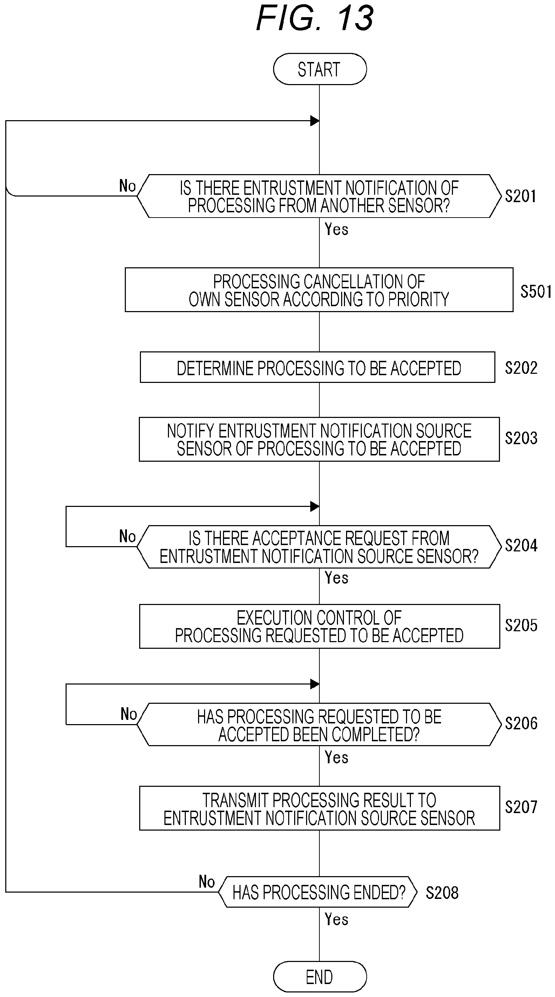

Fig. 13 illustrates a processing example on the accepting side in a case where the processing to be accepted is determined on the basis of the priority.

In Fig. 13, in a case where the in-sensor control unit 23 in this case determines that there is an entrustment notification of processing from another sensor in step S201, the processing proceeds to step S501 and cancels the processing of the own sensor according to the priority. That is, similarly to step S401 described above, in a case where there is processing having a priority equal to or lower than a predetermined value among the processing that the own sensor is in charge of, the processing having the priority equal to or lower than the predetermined value is excluded from the processing that the own sensor is in charge of.

By executing the processing in step S501, in a case where there is processing having a priority equal to or lower than a predetermined value among the processing in charge of the sensor on the accepting side, the processing capability surplus on the accepting side is increased, and it is possible to perform the processing that cannot be originally accepted with the processing capability surplus.

The in-sensor control unit 23 advances the processing to step S202 in response to the execution of the processing of step S501. Since the processing after step S202 is similar to that described in Fig. 8, redundant description is avoided.

### <3. Third Embodiment>

Here, in the above description, an example has been described in which any image sensor 10 having no processing capability surplus entrusts the processing of the own sensor to other sensors as a trigger of elimination of the processing capability surplus of the image sensor 10, thereby achieving processing distribution in the sensor group.

However, as a method of processing distribution, it is also possible to adopt a method in which any one of the image sensors 10 in the sensor group specifies processing of the entire sensor group, and performs allocation of processing to be assigned to each image sensor 10 such that the processing of the entire specified sensor group is distributed to each image sensor 10 in the sensor group.

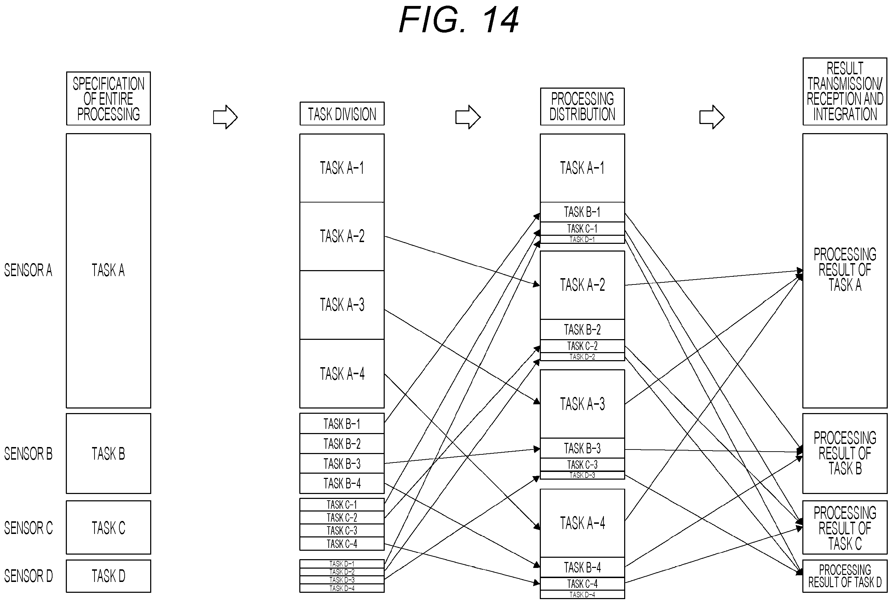

As an example of processing distribution in this case, for example, it is conceivable to perform uniform distribution as illustrated in Fig. 14.

Specifically, in Fig. 14, first, any one image sensor 10 in the sensor group specifies overall processing (processing of the entire sensor group) and performs task division. This task division is performed, for example, by dividing the task of each image sensor 10 into the same number as the number of image sensors 10 in the sensor group (hereinafter, n) as illustrated in the drawing.

Then, the tasks for each image sensor 10 are divided into n, and the divided tasks are equally allocated to each image sensor 10. Specifically, by allocating one of the divided tasks for each of the image sensors 10 to each of the image sensors 10, the processing amounts assigned to the image sensors 10 are equalized.

In this case, each image sensor 10 is in charge of a task of another image sensor 10. Therefore, as illustrated, each image sensor 10 outputs the processing result of the completed task to the corresponding image sensor 10 in response to the completion of the shared task.

Here, also in this case, the concept of processing priority as described in the second embodiment can be applied. Specifically, processing of each sensor is allocated on the basis of the priority.

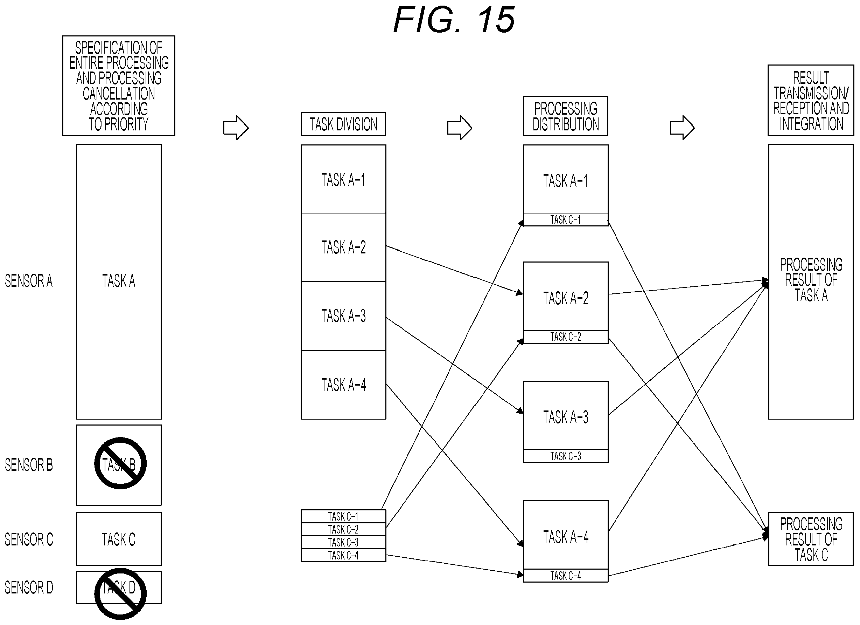

For example, as illustrated in Fig. 15, any one of the image sensors 10 in the sensor group specifies the entire processing and performs processing cancellation according to the priority. Fig. 15 illustrates an example in which tasks of two image sensors 10 among the image sensors 10 constituting the sensor group are excluded from processing to be executed by processing cancellation according to the priority.

Hereinafter, the task division, the point that division of tasks are equally allocated to each image sensor 10, and the point that processing of another image sensor 10 that has been completed by each image sensor 10 after completion of the processing is output to the another image sensor 10 are similar to the case of Fig. 14.

As can be seen from a comparison between Fig. 15 and Fig. 14 described above, it can be understood that the processing amount to be executed by each sensor can be greatly reduced by allocating the processing based on the priority.

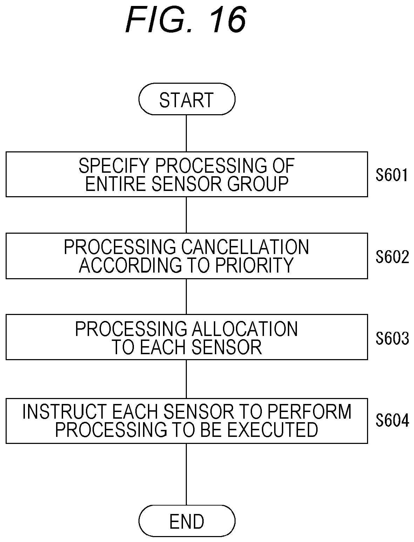

Fig. 16 is a flowchart illustrating a processing procedure example to be executed to implement the processing distribution method as the third embodiment described above.

Note that it is assumed that the processing illustrated in Fig. 16 is started in response to establishment of a predetermined condition, for example, being executed by the in-sensor control unit 23 in any one of the image sensors 10 in the sensor group at predetermined time intervals.

In Fig. 16, the in-sensor control unit 23 specifies processing of the entire sensor group in step S601. That is, a request is made to each image sensor 10 to notify the processing in charge, and the processing of the entire sensor group is specified by receiving the notification information from each image sensor 10.

In step S602 subsequent to step S601, the in-sensor control unit 23 performs processing cancellation according to the priority. That is, for the processing of the entire sensor group characterized in step S601, processing of excluding processing having a processing priority equal to or lower than a predetermined value from the processing to be executed is performed.

Note that, also in this case, it is not limited to canceling the processing according to the priority, and it is also possible to reduce the processing amount to be executed by reducing the weight of the low-priority processing or the like.

In step S603 subsequent to step S602, the in-sensor control unit 23 performs processing allocation for each sensor. That is, in the present example, the processing to be executed is determined for each image sensor 10 so that the processing to be executed in the sensor group is equally distributed to each image sensor 10.

In step S604 subsequent to step S603, the in-sensor control unit 23 instructs each sensor to perform processing to be executed. That is, the processing to be executed is instructed to each image sensor 10 according to the processing allocation for each image sensor 10 in step S603.

The in-sensor control unit 23 terminates the series of processes illustrated in Fig. 16 in response to execution of the processing of step S604.

Note that, in the above description, the example in which the processing is equally allocated to each sensor has been described, but it is not essential to equally allocate the processing.

For example, when determining processing to be allocated to each sensor, it is conceivable to consider the above-described environment information. In that case, for example, it is conceivable to cause the image sensor 10 having a high communication speed to take charge of processing of the image sensor 10 having a poor communication state such as a low communication speed. Alternatively, it is also conceivable to cause the image sensor 10 having a low temperature to take charge of the processing of the image sensor 10 having a high temperature. Furthermore, regarding the battery that supplies power to the image sensor 10, it is also conceivable to cause the image sensor 10 having a large remaining battery amount or the image sensor 10 supplied with power from a commercial AC power supply to take charge of the processing of the image sensor 10 having a small remaining battery amount.

In any of these cases, the processing amounts handled by the respective image sensors 10 are not equal.

Furthermore, as the allocation of the processing to each sensor, it is conceivable to adopt a method of equally allocating the processing except for the image sensor 10 in a poor communication state.

Furthermore, it is also conceivable that the allocation of processing to each sensor is performed in consideration of the processing capability of each sensor including the own sensor, and the throughput and latency of processing required for each sensor including the own sensor.

### <4. Modifications>

Note that the embodiments are not limited to the specific examples described above, and may be configured as various modifications.

For example, in the above description, an example has been described in which the plurality of image sensors 10 is communicably connected via the local network, but each image sensor 10 is only required to be connected at least to be able to perform data communication with each other. In this case, connection between the image sensors 10 (connection between the cameras 1) may be wired or wireless.

Furthermore, in the above description, a case where the image sensor 10 is configured to obtain a color image as a captured image has been exemplified, but in the present specification, "imaging" broadly means obtaining image data capturing a subject. The image data referred to herein is a general term for data including a plurality of pieces of pixel data, and the pixel data is a concept widely including not only data indicating the amount of light received from the subject but also, for example, data indicating a distance to the subject, data indicating a polarization state of incident light, data indicating temperature, and the like. That is, the "captured image" obtained by the "imaging" includes a gradation image indicating information on the amount of received light for each pixel, a distance image indicating information on the distance to the subject for each pixel, a polarized image indicating polarization information of incident light for each pixel, a thermal image indicating temperature information for each pixel, or the like.

### <5. Summary of Embodiments>

As described above, the sensor apparatus (image sensor 10) as an embodiment has a structure in which the first semiconductor layer (die D1) including the image array unit in which a plurality of pixels having a light receiving element is two-dimensionally arranged and the second semiconductor layer (die D2) including the AI processing unit (same 24) that performs AI processing, which is processing using an AI model, on a captured image obtained on the basis of a light receiving operation by the pixel array unit are laminated, and includes the control unit (in-sensor control unit 23) that performs control for distributing processing executed by the AI processing unit with another sensor apparatus having a structure in which the first semiconductor layer and the second semiconductor layer are laminated.

As a result, in the sensor group including the plurality of sensor apparatuses as the laminated AI sensor in which the first and second semiconductor layers are laminated, the processing executed by the AI processing unit is distributed. Furthermore, since the control of the processing distribution is performed between the sensor apparatuses mainly by the sensor apparatus, for example, the robustness of the AI processing can be improved as compared with a case where a configuration is adopted in which an external apparatus other than the sensor apparatus such as a server apparatus undertakes stopped processing or overflowed processing.

Therefore, regarding the sensor apparatus as the laminated AI sensor, it is possible to improve the processing efficiency of the AI processing unit, enhance the AI processing function and increase the speed, and improve the robustness of the AI processing.

Furthermore, in the sensor apparatus as an embodiment, the control unit performs control for distributing processing with other sensor apparatuses connected via a local network.

As a result, it is possible to realize a configuration in which a plurality of sensor apparatuses by the laminated AI sensor is connected to a local network to perform processing distribution. As described above, by adopting a configuration in which a plurality of sensor apparatuses is connected to a local network and processing is distributed, it is possible to appropriately distribute processing to each sensor according to a processing capability surplus of each sensor apparatus, and it is possible to improve processing efficiency in the entire sensor group.

Therefore, the AI processing function can be enhanced and sped up.

In addition, since each sensor apparatus is connected to the local network, it is easy to share the AI processing result among the sensor apparatuses, which is preferable.

Furthermore, in the sensor apparatus as an embodiment, the control unit determines processing to be executed on the basis of the priority of processing to be executed by the AI processing unit (see Figs. 12, 13, and 16).

By determining the processing to be executed according to the priority of the processing, for example, it is possible to reduce the processing amount such as excluding the low-priority processing from the processing to be executed or reducing the weight of the processing.

Therefore, in the sensor group including the plurality of sensor apparatuses, it is possible to increase the processing capability surplus and to suppress occurrence of overflow of the AI processing.

Furthermore, in the sensor apparatus according to an embodiment, the control unit excludes processing having a priority equal to or lower than a predetermined priority from processing to be executed.

As a result, the low-priority processing is excluded from the processing to be executed, and the processing capability surplus of the sensor apparatus can be increased.

Therefore, in a sensor group including a plurality of sensor apparatuses, it is possible to suppress occurrence of overflow of the AI processing.

In addition, in the sensor apparatus as an embodiment, the priority is determined on the basis of an arrangement positional relationship with another sensor apparatus.

As a result, as the priority, it is possible to determine the priority based on the positional relationship of the imaging range of which range each of the plurality of sensor apparatuses in the sensor group images.

Therefore, it is possible to appropriately determine the processing to be executed on the basis of the appropriate priority obtained by evaluating the degree of priority in terms of the positional relationship of the imaging range.

Furthermore, in the sensor apparatus as an embodiment, the priority is determined on the basis of the relationship of the number of target recognition in the target image of the AI processing among other sensor apparatuses.

As a result, for example, it is possible to determine the priority so that the processing of the AI processing unit in the sensor apparatus having a large number of target recognition is prioritized over the processing of the AI processing unit in the sensor apparatus having a small number of target recognition.

Therefore, it is possible to appropriately determine the processing to be executed on the basis of the appropriate priority obtained by evaluating the degree of priority in terms of the number of target recognition.

Furthermore, in the sensor apparatus as an embodiment, the priority is determined on the basis of the relationship of the feature amount of the target recognized by the AI processing among other sensor apparatuses.

As a result, for example, in a case where other sensor apparatuses are also performing processing on targets having the same feature amount, that is, subjects estimated to be the same subject, it is possible to avoid overlapping of the processing by setting the priority of the processing of any one of the sensor apparatuses to be lower than the priority of the processing of another sensor apparatus.

Therefore, it is possible to appropriately determine the processing to be executed on the basis of the appropriate priority obtained by evaluating the degree of priority in terms of the feature amount of the target.

Furthermore, in the sensor apparatus as an embodiment, the priority is determined on the basis of the relationship of the resolution of the target image of the AI processing among other sensor apparatuses.

As a result, for example, the AI processing for the high-resolution image can be preferentially performed by determining the priority so that the processing of the AI processing unit in the sensor apparatus in which the resolution of the target image of the AI processing is high is prioritized over the processing of the AI processing unit in the sensor apparatus in which the resolution of the target image is low.

Therefore, it is possible to appropriately determine the processing to be executed on the basis of the appropriate priority obtained by evaluating the degree of priority in terms of the resolution of the target image.

Furthermore, in the sensor apparatus as an embodiment, the control unit performs control to entrust the processing to another sensor apparatus in response to elimination of the processing capability surplus of the AI processing unit in the own apparatus (see Figs. 4, 7, and 12).

As a result, for example, in response to a case where the overflow of the processing occurs in the AI processing unit of the own apparatus, it is possible to entrust the processing having overflowed to another sensor apparatus.

Therefore, in the sensor group including the plurality of sensor apparatuses, the processing can be distributed such that the overflow of the processing does not occur in the sensor apparatus.

Furthermore, in the sensor apparatus as an embodiment, the control unit determines processing to be entrusted to another sensor apparatus on the basis of the priority of processing that the own apparatus is in charge of (see Fig. 12).

As a result, in a case where the processing to be entrusted to another sensor apparatus is determined in response to elimination of the processing capability surplus of the own apparatus, the determination of the processing to be entrusted can be performed after reduction of the processing amount of the own apparatus according to the priority. If the overflow state of the own apparatus can be eliminated by reducing the processing amount according to the priority, it is not necessary to entrust the processing to another sensor apparatus. That is, in this case, it is possible to determine that there is no processing to be entrusted. In addition, if the processing amount is reduced according to the priority, the processing amount to be handled by the own apparatus can be reduced even if the overflow state of the own apparatus is not eliminated. In this case, the processing amount entrusted to another sensor apparatus can be reduced.

Therefore, according to the above configuration, in the sensor group including the plurality of sensor apparatuses, it is possible to suppress occurrence of overflow of the processing in the sensor apparatus.

In addition, in the sensor apparatus as an embodiment, in a case where notification of entrustment of processing is made from another sensor apparatus, the control unit determines processing to be accepted from among the processing of which notification of entrustment is made, and determines the processing to be accepted on the basis of the priority of the processing that the own apparatus is in charge of (see Fig. 13).

As a result, in the sensor apparatus on the accepting side, the determination of the processing to be accepted can be performed after the reduction of the processing amount of the own apparatus according to the priority, the processing amount that can be accepted can be increased, and the possibility of accepting the entrusted processing can be increased.

Therefore, in a sensor group including a plurality of sensor apparatuses, it is possible to suppress occurrence of overflow of the processing in the sensor apparatus.

Furthermore, in the sensor apparatus as an embodiment, the control unit specifies processing of the entire sensor group including a plurality of sensor apparatuses including the own apparatus and other sensor apparatuses, and allocates processing to be assigned to each sensor apparatus such that the specified processing of the entire sensor group is distributed to each sensor apparatus in the sensor group (see Figs. 14 to 16).

As described above, when any one of the sensor apparatuses in the sensor group specifies the overall processing amount and then performs the allocation of the processing to be performed by each sensor apparatus, it is possible to perform the overall allocation of the processing such as equally allocating the processing to each sensor apparatus or allocating the processing of the amount according to the degree of the hardware resource of each sensor apparatus, unlike the case of adopting the method of entrusting the processing having overflowed of the sensor apparatus having no processing capability surplus to another sensor apparatus.

Therefore, it is possible to improve the degree of freedom of processing distribution in the sensor group.

Furthermore, in the sensor apparatus as an embodiment, the control unit allocates processing to be assigned to each sensor apparatus on the basis of the priority of processing of each sensor apparatus in the sensor group (see Figs. 15 and 16).

As a result, the allocation of the processing for distributing the processing of the entire sensor group to each sensor apparatus can be performed after reducing the processing amount based on the priority.

Therefore, it is possible to suppress occurrence of overflow of the processing in the sensor group.

Furthermore, a sensor control system as an embodiment includes a plurality of sensor apparatuses having a structure in which a first semiconductor layer including an image array unit in which a plurality of pixels having light receiving elements is two-dimensionally arranged and a second semiconductor layer including an AI processing unit that performs AI processing, which is processing using an AI model, on a captured image obtained on the basis of a light receiving operation by the pixel array unit are laminated, in which at least one of the sensor apparatuses includes a control unit that performs control for distributing processing executed by the AI processing unit with other sensor apparatuses.

Also with such a sensor control system, it is also possible to obtain functions and effects similar to those of the sensor apparatus as the above-described embodiments.

Furthermore, a control method as an embodiment is a control method in a sensor control system including a plurality of sensor apparatuses having a structure in which a first semiconductor layer including an image array unit in which a plurality of pixels having a light receiving element is two-dimensionally arranged and a second semiconductor layer including an AI processing unit that performs AI processing, which is processing using an AI model, on a captured image obtained on the basis of a light receiving operation by the pixel array unit are laminated, in which at least one of the sensor apparatuses performs control for distributing processing executed by the AI processing unit with other sensor apparatuses.

Also with such a control method, it is possible to obtain functions and effects similar to those of the sensor apparatus as the above-described embodiments.

Note that the effects described in the present specification are merely examples and are not limited, and other effects may be provided.

### <6. Present Technology>

The present technology may also have the following configurations.
(1) A sensor apparatus including
   a structure in which a first semiconductor layer including an image array unit in which a plurality of pixels having a light receiving element is two-dimensionally arranged, and a second semiconductor layer including an AI processing unit that performs AI processing, which is processing using an AI model, on a captured image obtained on the basis of a light receiving operation by the pixel array unit are laminated, and
   a control unit that performs control for distributing processing executed by the AI processing unit with another sensor apparatus having a structure in which the first semiconductor layer and the second semiconductor layer are laminated.
(2) The sensor apparatus according to (1),
   in which the control unit performs control for distributing the processing with the another sensor apparatus connected via a local network.
(3) The sensor apparatus according to (1) or (2),
   in which the control unit determines processing to be executed on the basis of priority of processing executed by the AI processing unit.
(4) The sensor apparatus according to (3),
   in which the control unit excludes processing of which a priority is equal to or lower than a predetermined priority from the processing to be executed.
(5) The sensor apparatus according to (3) or (4),
   in which the priority is determined on the basis of an arrangement positional relationship with the another sensor apparatus.
(6) The sensor apparatus according to any one of (3) to (5),
   in which the priority is determined on the basis of a relationship of the number of target recognition in a target image of the AI processing with the another sensor apparatus.
(7) The sensor apparatus according to any one of (3) to (6),
   in which the priority is determined on the basis of a relationship of a feature amount of a target recognized by the AI processing with the another sensor apparatus.
(8) The sensor apparatus according to any one of (3) to (7),
   in which the priority is determined on the basis of a relationship of resolution of a target image of the AI processing with the another sensor apparatus.
(9) The sensor apparatus according to any one of (1) to (8),
   in which the control unit performs control to entrust processing to the another sensor apparatus in response to elimination of processing capability surplus of the AI processing unit in an own apparatus.
(10) The sensor apparatus according to (9),
   in which the control unit determines processing to be entrusted to the another sensor apparatus on the basis of priority of processing that the own apparatus is in charge of.
(11) The sensor apparatus according to (10),
   in which in a case where notification of entrustment of processing is made from the another sensor apparatus, the control unit determines processing to be accepted from among the processing of which notification of entrustment is made, and determines the processing to be accepted on the basis of the priority of the processing that the own apparatus is in charge of.
(12) The sensor apparatus according to any one of (1) to (8),
   in which the control unit specifies processing of an entire sensor group including a plurality of sensor apparatuses including the own apparatus and the another sensor apparatus, and allocates processing to be assigned to each sensor apparatus such that the processing specified of the entire sensor group is distributed to each sensor apparatus in the sensor group.
(13) The sensor apparatus according to (12),
   in which the control unit performs allocation of processing to be assigned to each sensor apparatus on the basis of priority of processing of each sensor apparatus in the sensor group.
(14) A sensor control system including
   a plurality of sensor apparatuses having a structure in which a first semiconductor layer including an image array unit in which a plurality of pixels having a light receiving element is two-dimensionally arranged, and a second semiconductor layer including an AI processing unit that performs AI processing, which is processing using an AI model, on a captured image obtained on the basis of a light receiving operation by the pixel array unit are laminated,
   in which at least one of the sensor apparatuses includes a control unit that performs control for distributing processing executed by the AI processing unit with another sensor apparatus.
(15) A control method in a sensor control system including a plurality of sensor apparatuses having a structure in which a first semiconductor layer including an image array unit in which a plurality of pixels having a light receiving element is two-dimensionally arranged, and a second semiconductor layer including an AI processing unit that performs AI processing, which is processing using an AI model, on a captured image obtained on the basis of a light receiving operation by the pixel array unit are laminated,
   in which at least one of the sensor apparatuses performs control for distributing processing executed by the AI processing unit with another sensor apparatus.

### REFERENCE SIGNS LIST

- 1: Camera
- 2: Local network
- 3: Fog server
- 4: Server apparatus
- 5: User terminal
- 6: Network
- 10: Image sensor
- 11: Imaging optical system
- 12: Optical system drive unit
- 13: Control unit
- 14: Memory unit
- 15: Communication unit
- 16: Sensor unit
- 17: Bus
- 21: Imaging unit
- 22: Image signal processing unit
- 23: In-sensor control unit
- 24: AI processing unit
- 25: Memory unit
- 26: Computer vision processing unit
- 27: Communication interface
- 28: Bus
- D1, D2: Die

## Claims

1. A sensor apparatus comprising
a structure in which a first semiconductor layer including an image array unit in which a plurality of pixels having a light receiving element is two-dimensionally arranged, and a second semiconductor layer including an AI processing unit that performs AI processing, which is processing using an AI model, on a captured image obtained on a basis of a light receiving operation by the pixel array unit are laminated, and
a control unit that performs control for distributing processing executed by the AI processing unit with another sensor apparatus having a structure in which the first semiconductor layer and the second semiconductor layer are laminated.

2. The sensor apparatus according to claim 1,
wherein the control unit performs control for distributing the processing with the another sensor apparatus connected via a local network.

3. The sensor apparatus according to claim 1,
wherein the control unit determines processing to be executed on a basis of priority of processing executed by the AI processing unit.

4. The sensor apparatus according to claim 3,
wherein the control unit excludes processing of which a priority is equal to or lower than a predetermined priority from the processing to be executed.

5. The sensor apparatus according to claim 3,
wherein the priority is determined on a basis of an arrangement positional relationship with the another sensor apparatus.

6. The sensor apparatus according to claim 3,
wherein the priority is determined on a basis of a relationship of the number of target recognition in a target image of the AI processing with the another sensor apparatus.

7. The sensor apparatus according to claim 3,
wherein the priority is determined on a basis of a relationship of a feature amount of a target recognized by the AI processing with the another sensor apparatus.

8. The sensor apparatus according to claim 3,
wherein the priority is determined on a basis of a relationship of resolution of a target image of the AI processing with the another sensor apparatus.

9. The sensor apparatus according to claim 1,
wherein the control unit performs control to entrust processing to the another sensor apparatus in response to elimination of processing capability surplus of the AI processing unit in an own apparatus.

10. The sensor apparatus according to claim 9,
wherein the control unit determines processing to be entrusted to the another sensor apparatus on a basis of priority of processing that the own apparatus is in charge of.

11. The sensor apparatus according to claim 10,
wherein in a case where notification of entrustment of processing is made from the another sensor apparatus, the control unit determines processing to be accepted from among the processing of which notification of entrustment is made, and determines the processing to be accepted on a basis of the priority of the processing that the own apparatus is in charge of.

12. The sensor apparatus according to claim 1,
wherein the control unit specifies processing of an entire sensor group including a plurality of sensor apparatuses including the own apparatus and the another sensor apparatus, and allocates processing to be assigned to each sensor apparatus such that the processing specified of the entire sensor group is distributed to each sensor apparatus in the sensor group.

13. The sensor apparatus according to claim 12,
wherein the control unit performs allocation of processing to be assigned to each sensor apparatus on a basis of priority of processing of each sensor apparatus in the sensor group.

14. A sensor control system comprising
a plurality of sensor apparatuses having a structure in which a first semiconductor layer including an image array unit in which a plurality of pixels having a light receiving element is two-dimensionally arranged, and a second semiconductor layer including an AI processing unit that performs AI processing, which is processing using an AI model, on a captured image obtained on a basis of a light receiving operation by the pixel array unit are laminated,
wherein at least one of the sensor apparatuses includes a control unit that performs control for distributing processing executed by the AI processing unit with another sensor apparatus.

15. A control method in a sensor control system including a plurality of sensor apparatuses having a structure in which a first semiconductor layer including an image array unit in which a plurality of pixels having a light receiving element is two-dimensionally arranged, and a second semiconductor layer including an AI processing unit that performs AI processing, which is processing using an AI model, on a captured image obtained on a basis of a light receiving operation by the pixel array unit are laminated,
wherein at least one of the sensor apparatuses performs control for distributing processing executed by the AI processing unit with another sensor apparatus.
